# EUROPÄISCHE PATENTSCHRIFT

(11) **EP 3 838 076 B1**
(45) Veröffentlichungstag und Bekanntmachung des Hinweises auf die Patenterteilung: **20.09.2023**
(21) Anmeldenummer: 20207678.2
(22) Anmeldetag: 16.11.2020
(51) Int. Cl.: A47J 31/057, A47J 31/06, A47J 31/44

(54) **VORRICHTUNG UND VERFAHREN ZUR ZUBEREITUNG EINES BRÜHGETRÄNKES**
DEVICE AND METHOD FOR PRODUCING A BREWED BEVERAGE
DISPOSITIF ET PROCÉDÉ DE PRÉPARATION D'UNE BOISSON INFUSÉE

(30) Priorität: 20.12.2019 DE 102019135396
(43) Veröffentlichungstag der Anmeldung: 23.06.2021
(73) Patentinhaber: 10 X Innovation GmbH & Co. KG, 10961 Berlin (DE)
(72) Erfinder: KORTE, René, 30161 Hannover (DE); RÖSLER, Jan, 10249 Berlin (DE)
(74) Vertreter: Dantz, Jan Henning

(56) Entgegenhaltungen:
- EP-A1- 2 898 801
- WO-A1-02/087399
- WO-A1-2008/007306
- WO-A2-2008/139205
- DE-T2- 69 602 046
- US-A- 3 490 356
- US-A1- 2014 069 353
- US-A1- 2017 119 195
- US-A1- 2017 188 748

## Beschreibung

Die vorliegende Erfindung betrifft eine Vorrichtung zur Zubereitung eines Brühgetränkes, insbesondere Kaffee, nach dem Oberbegriff des Anspruches 1, und ein Verfahren zur Zubereitung eines Brühgetränkes.

Die DE 10 2015 121 634 B4 offenbart eine Kaffeemaschine, bei der heißes Wasser über eine Auslasseinrichtung oberhalb eines Filtergefäßes mit einem Filterpapiereinsatz mit Kaffeemehl angeordnet ist. Die Auslasseinrichtung weist eine zentrale Auslassöffnung über einem mittleren Bereich des befüllten Filterpapiereinsatzes und mehrere äußere Auslassöffnungen auf, die oberhalb eines mittleren Bereiches der Seitenwände des befüllten Filterpapiereinsatzes angeordnet sind. Über einen Wahlschalter kann die Durchflussmenge an heißem Wasser zu den einzelnen Auslassöffnungen verändert werden, so dass die Kaffeestärke eingestellt werden kann. Zudem wird über die Vielzahl von Auslassöffnungen das Kaffeemehl gleichmäßiger benetzt. Solche Auslassöffnungen haben sich an sich bewährt, allerdings werden für eine gleichmäßige Benetzung des Kaffeemehls an der Oberseite eine Vielzahl von Auslassöffnungen benötigt, die das Kaffeemehl benetzen. Das erhitzte Wasser strömt durch die Schwerkraft im Wesentlichen senkrecht nach unten auf das Kaffeemehl.

In der US 2017/0188748 ist eine Kaffeemaschine offenbart, bei der heißes Waser über einen drehbaren Zulauf mit einer Vielzahl von Auslassöffnungen gefördert werden kann. Durch die geneigte Anordnung der Auslassöffnungen ist der Zulauf durch die austretenden Wasserstrahlen angetrieben.

Es ist daher Aufgabe der vorliegenden Erfindung, eine Vorrichtung zur Zubereitung eines Brühgetränkes und ein entsprechendes Verfahren zu schaffen, mit der eine verbesserte Benetzung des Extraktionsmaterials in einem Filterhalter bereitgestellt wird.

Diese Aufgabe wird mit einer Vorrichtung mit den Merkmalen des Anspruches 1 sowie einem Verfahren mit den Merkmalen des Anspruches 12 gelöst.

Bei der erfindungsgemäßen Vorrichtung wird das Wasser über eine Pumpe zu einem Auslass mit mindestens einer Auslassöffnung gefördert, wobei an dieser mindestens einen Auslassöffnung das erhitzte Wasser geneigt zur Vertikalen ausströmt und durch eine Druckänderung der Pumpe eine streifenförmige Fläche des Extraktionsmaterials benetzbar ist. Durch eine Druckänderung der Pumpe an der Auslassseite, beispielsweise durch Änderung der Drehzahl der Pumpe, kann somit ein Wasserstrahl an erhitztem Wasser mit mehr oder weniger Druck an der Auslassöffnung ausgegeben werden, so dass der Wasserstrahl bei höherem Druck sich eine größere Wegstrecke in horizontale Richtung von der Auslassöffnung entfernt als bei geringem Druck, bei dem die Strömungsgeschwindigkeit an der Auslassöffnung geringer ist und somit ein eher bogenförmiger Strahl des erhitzten Wassers erzeugt wird, der in horizontale Richtung nur eine geringere Wegstrecke zurücklegt. Dadurch kann durch die Druckänderung der Pumpe eine im Wesentlichen gerade streifenförmige Fläche benetzt werden, wenn der Auslass stillstehend angeordnet ist. Bei einem drehbaren Auslass kann die Fläche ebenfalls streifenförmig ausgebildet sein, allerdings dann mit einer spiralförmigen Form.

Vorzugsweise in ein rohrförmiger Leitungsabschnitt vor der mindestens einen Auslassöffnung geneigt zur Vertikalen ausgerichtet. Dadurch kann das erhitzte Wasser mit einer bestimmten Förderrichtung aus der Auslassöffnung ausgegeben werden. Die Förderrichtung entspricht dabei vorzugsweise einem maximalen Winkel des Wasserstrahls zur Vertikalen an der Auslassöffnung, der beispielsweise zwischen 10° bis 60°, insbesondere zwischen 20° bis 40°, liegt. Dadurch kann der Wasserstrahl entsprechend schräg aus der Auslassöffnung ausgegeben werden und überstreicht dann je nach Druck und Geschwindigkeit des Wasserstrahls eine vorbestimmte Fläche des Extraktionsmaterials. Bei geringem Druck kann der Wasserstrahl auch im Wesentlichen vertikal von der Auslassöffnung nach unten abtropfen.

Die Wegstrecke des Wasserstrahls in horizontale Richtung kann beispielsweise in einem Bereich zwischen 0 cm (vertikales Abtropfen) und bis zu 4 cm betragen, insbesondere zwischen 0 und 3 cm.

In der erfindungsgemäßen Ausgestaltung ist zwischen der Pumpe und dem Auslass ein Ventil vorgesehen, um das erhitzte Wasser wahlweise über eine erste Leitung oder über eine zweite Leitung zu dem Auslass zu fördern. Die in der Basisstation angeordnete Pumpe kann somit über das Ventil wahlweise Wasser durch die erste oder zweite Leitung fördern, wobei die erste Leitung das erhitzte Wasser zu mindestens einer ersten Auslassöffnung und die zweite Leitung das erhitzte Wasser zu mindestens einer zweiten Auslassöffnung fördert. Dabei kann zumindest eine der Auslassöffnungen mittig an dem Auslass angeordnet sein, während mindestens eine weitere Auslassöffnung radial nach außen hervorstehend um die mittige Auslassöffnung angeordnet ist. Vorzugsweise sind um eine mittige Auslassöffnung mehrere radial nach außen gerichtete Leitungen mit Auslassöffnungen vorgesehen, beispielsweise zwischen drei und sieben Auslassöffnungen.

In einer weiteren Ausgestaltung, ist hinter der Heizeinrichtung ein Schaltventil angeordnet, um das erhitzte Wasser wahlweise wieder in den Tank für Frischwasser zurückzuleiten oder das erhitzte Wasser dem Auslass zuzuführen. Dadurch kann über die Pumpe und die Heizeinrichtung zunächst ein Vorwärmen des Wassers aus dem Tank für Frischwasser vorgenommen werden, beispielsweise bis zu einer vorbestimmten Temperatur zwischen 40 °C bis 70 °C, um dann erst in einem zweiten Schritt das vorgewärmte Wasser über die Pumpe durch die Heizeinrichtung dem Auslass zuzuleiten. Ein solches Vorheizen des Wassers in dem Tank für Frischwasser kann beispielsweise auch parallel zu einem Mahlvorgang stattfinden, wenn auf der Basisstation eine zusätzliche Mahleinheit angeordnet ist. Durch den Einsatz von vorgeheiztem Wasser wird die Zubereitungszeit für das Brühen von Kaffee verkürzt.

In einer bevorzugten Ausgestaltung ist der Auslass mit der mindestens einen Auslassöffnung abnehmbar an einer Zulaufleitung zu dem Auslass angeordnet. Die Zulaufleitung kann dabei in einem formstabilen Rohr angeordnet sein, an dem beispielsweise auch ein Montagehalter für den Filterhalter angeordnet ist. Dann kann der Auslass auf einfache Weise abgenommen und gereinigt werden. Der Auslass kann für eine einfache Montage über einen oder mehrere Magneten an der Zulaufleitung lösbar fixiert sein, wobei die Magnete an dem Auslass und /oder der Zulaufleitung angeordnet werden können.

Für eine einfache Handhabung ist der Tank für Frischwasser abnehmbar an der Basisstation angeordnet. Dabei kann der Tank über einen ersten Anschluss zum Ableiten von Wasser aus dem Tank für Frischwasser in die Basisstation und über einen zweiten Anschluss zum Zuführen von erhitztem Wasser aus der Basisstation in den Frischwassertank mit der Basisstation verbunden sein.

In einer bevorzugten Ausführungsform ist auf der Basisstation zusätzlich eine Mahleinheit mit einem Behälter für Kaffeebohnen zum Mahlen derselben angeordnet. Dann kann der Benutzer die Kaffeebohnen über die Mahleinheit mahlen und das frisch gemahlene Kaffeemehl in dem Filterhalter auffangen, um dann den Filterhalter für einen Brühvorgang unter dem Auslass zu positionieren.

Vorzugsweise ist an dem Zulauf ein Sensor angeordnet, mittels dem erfassbar ist, ob ein Filterhalter, insbesondere ein gefüllter Filterhalter, unter dem Auslauf angeordnet ist. Dann kann eine Ausgabe von heißem Wasser an dem Auslass verhindert werden, falls versehentlich kein Filterhalter oder auch ein gefüllter Filterhalter unter dem Auslass angeordnet ist. Ein solcher Sensor kann beispielsweise über optische Mittel eine Erkennung durchführen, beispielsweise indem Lichtstrahlen ausgegeben werden und die reflektierten Lichtstrahlen über einen optischen Sensor erfasst werden. Zumindest die Farbgebung unterhalb des Sensors lässt sich auf diese Weise erfassen.

Bei dem erfindungsgemäßen Verfahren wird das Wasser aus dem Tank zu einer Heizeinrichtung und dem Auslass über eine Pumpe gefördert, wobei an dem Auslass mindestens eine Auslassöffnung vorgesehen ist, aus der das erhitzte Wasser geneigt zur Vertikalen ausströmt, wobei durch eine Druckänderung der Pumpe eine streifenförmige Fläche des Extraktionsmaterials benetzt wird. Durch die Druckänderung, beispielsweise durch eine Drehzahländerung, aber auch durch Einsatz von Drosseln an der Auslassseite der Pumpe, kann der Druck und somit die Auslassgeschwindigkeit des erhitzten Wassers verändert werden, um eine entsprechende streifenförmige Benetzung durchzuführen. Vorzugsweise wird während des Förderns von Wasser die Pumpe pulsierend betrieben, also mit sich ändern Drehgeschwindigkeiten, um das Wasser möglichst flächig auf das Extraktionsmaterial zu geben. Der Auslass kann dabei wahlweise stillstehend angeordnet sein oder drehbar gelagert sein und beim Fördern von Wasser gedreht werden.

Die Erfindung wird nachfolgend anhand eines Ausführungsbeispiels mit Bezug auf die beigefügten Zeichnungen näher erläutert. Es zeigen:

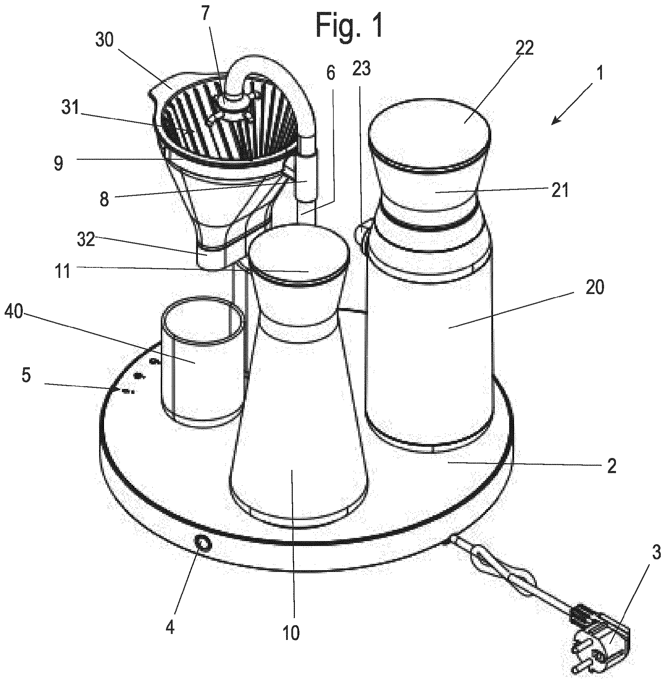

- Figur 1: eine perspektivische Ansicht der erfindungsgemäßen Vorrichtung;
- Figur 2: eine Seitenansicht der Vorrichtung der Figur 1 ;
- Figur 3: eine perspektivische Ansicht der Basisstation;
- Figur 4: eine Ansicht der Mahleinheit;
- Figur 5: ein schematisches Schaubild der Vorrichtung der Figur 1, und
- Figur 6: eine Unteransicht des Auslasses.

Eine Vorrichtung 1 zur Zubereitung eines Brühgetränkes, insbesondere Kaffee, umfasst eine Basisstation 2, mit einem im Wesentlichen plattenförmigen Körper, der ein Gehäuse ausbildet. Die Basisstation 2 ist über einen Netzstecker 3 mit einer Stromversorgung verbunden. In dem Gehäuse der Basisstation 2 befinden sich eine Steuerung, mindestens eine Pumpe und eine Heizeinrichtung zum Erwärmen von Wasser. Die Basisstation 2 kann dabei über einen Schalter 4 ein- und ausgeschaltet werden und weist ein Bedienfeld 5 auf, um bestimmte Parameter beim Brühvorgang automatisch zu steuern.

Auf der Basisstation 2 ist ein Tank 10 abnehmbar angeordnet, der über einen Deckel 11 verschlossen ist. Neben dem Tank 10 ist eine Mahleinheit 20 auf der Basisstation 2 abgestellt, die ebenfalls von der Basisstation 2 abnehmbar ist, optional aber auch fest mit dieser verbunden sein kann. Die Mahleinheit 20 ist dabei um eine vertikale Achse drehbar auf der Basisstation 2 angeordnet, so dass die Richtung eines Auslasses 23 für gemahlenes Kaffeemehl vom Benutzer beliebig vorgenommen werden kann. Die Mahleinheit 20 ist dabei vorzugsweise über Rastmittel, insbesondere mindestens einen Magneten, an der Basisstation 2 gehalten. Die Mahleinheit 20 umfasst einen Motor zum Antrieb des Mahlwerkes, sowie einen Behälter 21 für Kaffeebohnen, der über einen Deckel 22 verschlossen ist.

Auf der Basisstation 2 ist ferner eine von dem Körper der Basisstation 2 nach oben hervorstehende Zuleitung 6 für heißes Wasser vorgesehen, die sich zunächst vertikal nach oben erstreckt und dann U-förmig gebogen ist und an einem Auslass 7 mündet, der optional abnehmbar ist. Von dem Auslass 7 kann erhitztes Wasser in einen Filterhalter 30 eingeleitet werden, der einen Innenraum 31 aufweist, insbesondere einen trichterförmigen oder konusförmigen Innenraum, der an der Unterseite einen Auslass 32 aufweist, um gebrühten Kaffee in ein Gefäß 40, wie eine Tasse oder eine Kanne, abzuleiten. Der Filterhalter 30 ist dabei an einem Montagehalter 9 in einem vorbestimmten Abstand von der Oberfläche der Basisstation 2 angeordnet, beispielsweise zwischen 8 und 20 cm, insbesondere 10 bis 15 cm, um ein Gefäß 40 unter dem Filterhalter 30 abstellen zu können. Der Montagehalter 9 umfasst zwei Arme, die den Filterhalter 30 klemmend oder rastend umgreifen oder diesen lose abstützen. Auch andere Haltemittel können zur Fixierung des Filterhalters 30 eingesetzt werden. Der Montagehalter 9 ist über eine Hülse 8 an der Zuleitung 6 fixiert.

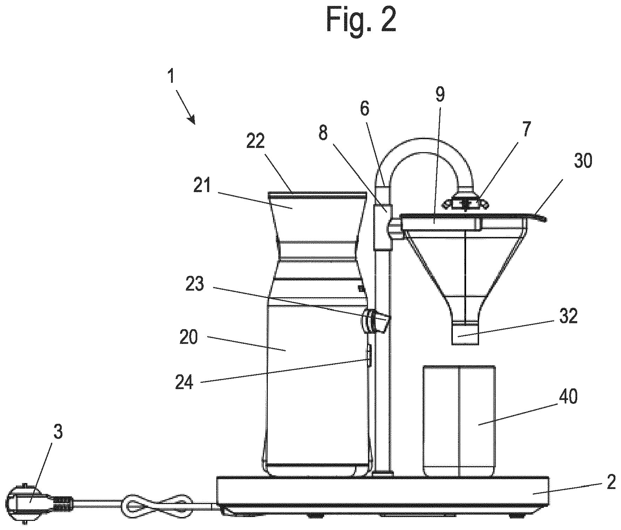

In Figur 2 ist erkennbar, dass die Mahleinheit 20 einen Halter 24 aufweist, der unterhalb des Auslasses 23 für gemahlenes Kaffeemehl angeordnet ist, wobei die Position des Halters 24 auch neben oder über dem Auslass 23 angeordnet sein kann. An dem Halter 24 kann der Filterhalter 30 mit einem Verbindungselement eingehängt werden, so dass das Gewicht des Filterhalters 30 an dem Halter 24 gehalten wird. Der Halter 24 ist vorzugsweise mit einer Wägezelle gekoppelt, die nach dem Einhängen des Filterhalters 30 erfasst, welche Menge an Kaffeemehl in den Filterhalter 30 eingefügt wird. Dadurch kann, abhängig von der eingestellten Kaffeestärke und der zu brühenden Wassermenge, bestimmt werden, welche Menge an Kaffeemehl in den Filterhalter 30 über die Mahleinheit 20 eingefüllt wird.

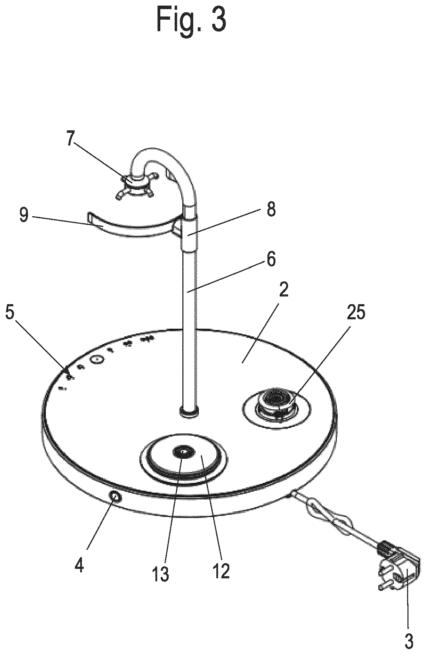

In Figur 3 ist die Basisstation 2 ohne die Mahleinheit 20 und den Tank 10 gezeigt. An der Oberseite der im Wesentlichen plattenförmigen Basisstation 2 befindet sich ein domförmiger Verbindungsstecker 25, beispielsweise ein zapfenförmiger Vorsprung, der einen Verbindungsstecker ausbildet und mit einem Stecker oder einer Buchse an der Unterseite der Mahleinheit 20 verbindbar ist, um die Mahleinheit 20 elektrisch mit der Basisstation 2 zu verbinden. Zudem können auch eine oder mehrere Steuerleitungen bei einer Kontaktierung verbunden werden. Durch den im Querschnitt kreisförmigen Verbindungsstecker 25 kann die Mahleinheit 20 um eine vertikale Achse gedreht werden und bleibt mit der Basisstation 2 elektrisch verbunden.

An der Oberseite der Basisstation 2 ist ferner ein Anschluss 12 zur Verbindung mit dem Tank 10 für Frischwasser vorgesehen, der mindestens eine Öffnung 13 aufweist, durch die das Wasser aus dem Tank 10 in die Basisstation 2 eingeleitet und dort erhitzt werden kann, um das erhitzte Wasser dann über die Zuleitung 6 und den Auslass 7 in den Filterhalter 30 zu fördern.

Das Bedienfeld 5 an der Basisstation 2 kann beispielsweise zur Einstellung der Stärke des Kaffees dienen und auch der Menge an zu brühendem Kaffee. Indirekt kann dadurch auch der Mahlgrad eingestellt werden.

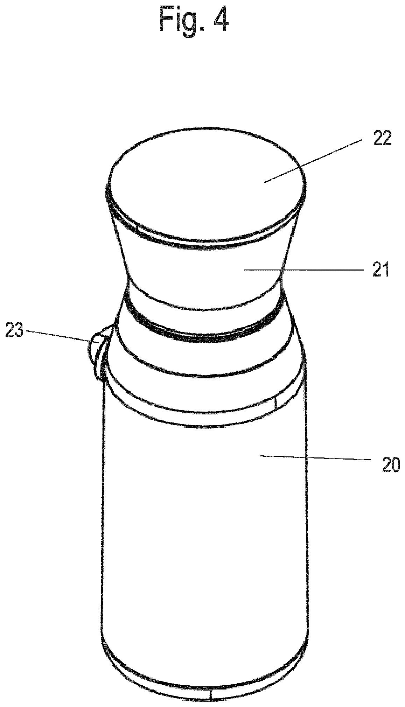

In Figur 4 ist die Mahleinheit 20 gezeigt. Die Mahleinheit 20 umfasst einen unteren, im Wesentlichen zylinderförmigen Abschnitt, in dem ein Motor für das Mahlwerk sowie eine Steuerung vorgesehen sein können. Darüber ist der Behälter 21 für Kaffeebohnen angeordnet, über den Kaffeebohnen in das Mahlwerk gefördert werden können, um dann das gemahlene Kaffeemehl an dem Auslass 23 auszugeben.

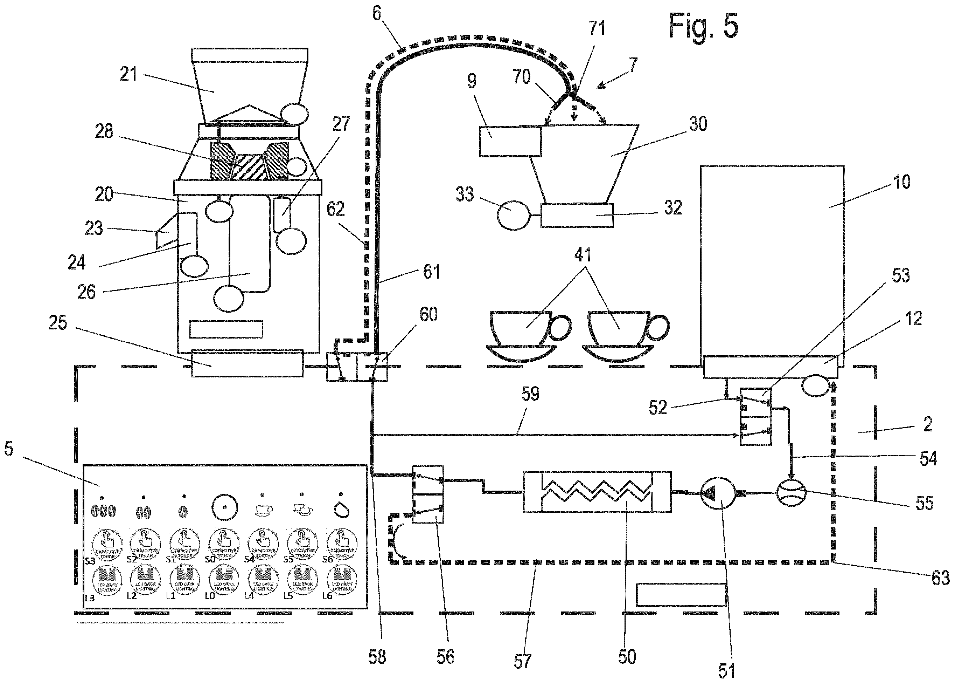

In Figur 5 ist ein Ablaufdiagramm der Vorrichtung 1 schematisch dargestellt. Der Tank 10 mit Frischwasser ist über den Anschluss 12 mit der Basisstation 2 verbunden, die durch den gestrichelten Rahmen dargestellt ist. Dabei ist ein Anschluss 12 über eine Leitung 52 und ein schaltbares Ventil 53, eine Leitung 54, ein Drosselelement 55 mit einer Pumpe 51 verbunden, so dass Wasser aus dem Tank 10 zu der Pumpe 51 angesaugt werden kann. Über die Pumpe 51 wird das Wasser durch eine schematisch dargestellte Heizeinrichtung 50 mit Heizwiderständen gefördert, um das vorgewärmte oder erhitzte Wasser zu einem Ventil 56 zu fördern. Das Ventil 56 ist zwischen zwei Positionen schaltbar. In einer ersten Position wird Wasser von der Heizeinrichtung 50 über eine Rückführleitung 63, die gestrichelt dargestellt ist, wieder über den Anschluss 12 in den Tank 10 für Frischwasser eingeleitet. Dadurch kann das Wasser in dem Tank 10 vorgewärmt werden, was beispielsweise zeitgleich oder zumindest teilweise zeitgleich zu dem Mahlvorgang stattfinden kann. Das Vorwärmen des Wassers in dem Tank 10 erfolgt vorzugsweise bis zu einer bestimmten Temperatur, beispielsweise zwischen 40° und 60°. Erst wenn eine bestimmte Vorlauftemperatur erreicht wird, kann das Ventil 56 in die zweite Position geschaltet werden, um das durch die Heizeinrichtung 51 durchgeleitete erhitzte Wasser über eine Leitung 58 der Zuleitung 6 zuzuführen.

In der Leitung 58 befindet sich ein weiteres Ventil 60, das das heiße Wasser wahlweise einer ersten Leitung 61 zu einem ersten Auslass 70 oder zu einer zweiten Leitung 62 zu einem zweiten Auslass 71 fördert. Der erste Auslass 70 kann beispielsweise einen Randbereich des Kaffeemehls in dem Filterhalter 30 benetzen, während der zweite Auslass 71 eher einen mittleren Bereich des Kaffeemehls in dem Filterhalter 30 benetzt. Die Auslässe 70 und 71 können zeitgleich oder abwechselnd angesteuert werden, um einen möglichst gleichmäßigen Extraktionsvorgang zu gewährleisten.

Die Leitung 58 ist ferner über eine Entleerungsleitung 59 mit dem Ventil 53 verbunden, so dass nach dem Brühvorgang noch vorhandenes Restwasser aus der Zuleitung 6 angesaugt und wieder in den Tank 10 für Frischwasser eingeleitet werden kann.

Auf der Basisstation 2 ist ferner die Mahleinheit 20 abgestellt, die über einen Verbindungsstecker 25 zur elektrischen Kontaktierung zur Stromversorgung und/oder Steuerung mit der Mahleinheit 20 verbunden ist. In der Mahleinheit 20 befindet sich ein Elektromotor 26, mit dem das Mahlwerk 28 angetrieben wird.

Über das Mahlwerk 28 kann vorzugsweise der Mahlgrad eingestellt werden, um die Kaffeebohnen in dem Behälter 21 in der gewünschten Feinheit zu zermahlen. Hierfür kann eine entsprechende Einstellvorrichtung 27 vorgesehen sein, die über eine Steuerleitung ansteuerbar ist.

An der Mahleinheit 20 befindet sich ferner der Auslass 23 für gemahlenes Kaffeemehl und der Halter 24 zum Einhängen des Filterhalters 30. Der Halter 24 ist mit der Wägeeinheit verbunden, die optional ebenfalls mit der Steuerung in der Basisstation 2 gekoppelt sein kann.

In Figur 5 ist ferner noch das Bedienfeld 5 gezeigt, mittels dem gewisse Einstellungen zum Brühen von Kaffee vorgenommen werden können, insbesondere die Kaffeestärke und die Menge an gebrühtem Kaffee.

An dem Auslass 32 an der Unterseite des Filterhalters 30 können vorzugsweise zwei beabstandete Öffnungen vorgesehen sein, um optional auch gleichzeitig zwei Tassen 41 befüllen zu können. An dem Auslass 32 ist ein Ventil 33 vorgesehen, um eine Auslassöffnung an dem Filterhalter 30 wahlweise zu verschlie-ßen oder zu öffnen, um die Verweilzeit des heißen Wasser an dem Kaffeemehl beim Brühen einstellen zu können. Zudem wirkt das Ventil 33 als Tropfschutz. Das Ventil 33 kann über eine nicht dargestellte Stromversorgung über den Montagehalter 9 und die Zuleitung 6 mit der Basisstation 2 verbunden sein.

Zur Zubereitung von Kaffee wird zunächst der Tank 10 mit ausreichend Frischwasser gefüllt und anschließend eine Kaffeestärke an dem Bedienfeld 5 sowie die Wassermenge eingestellt. Der Filterhalter 30 wird vorzugsweise mit einem Filterpapiereinsatz gefüllt, der optional auch weggelassen werden kann, wenn der Filterhalter 30 ein entsprechendes Sieb aufweist. Der mit dem Filterpapiereinsatz gefüllte Filterhalter 30 wird dann an dem Halter 24 eingehängt, wobei der Halter 24 das Einhängen des Filterhalters 30 über einen Sensor erfassen kann, um dann automatisch mit dem Mahlvorgang zu starten. Alternativ kann der Mahlvorgang auch über eine Taste an dem Bedienfeld 5 eingeleitet werden. Sobald die gewünschte Menge an Kaffeemehl in den Filterhalter 30 eingefüllt wurde, stoppt die Mahleinheit 20 den Mahlvorgang. Während des Mahlvorganges kann das Wasser in dem Tank 10 über die Pumpe 51 und die Heizeinrichtung 50 vorgewärmt werden, beispielsweise zwischen 20° bis 50° über Raumtemperatur.

Der Filterhalter 30 wird nun von der Mahleinheit 20 entfernt und an dem Montagehalter 9 fixiert. Dann kann über das Drücken einer Taste oder automatisch das Einfüllen von heißem Wasser über die Zuleitung 6 erfolgen, wahlweise über einen einzigen Auslass 70 oder 71oder wechselnd über mehrere Auslässe 70 und 71. Der gebrühte Kaffee wird dann bei Öffnen des Ventils 33 an dem Auslass 32 in die Tassen 41 oder andere Gefäße abgelassen.

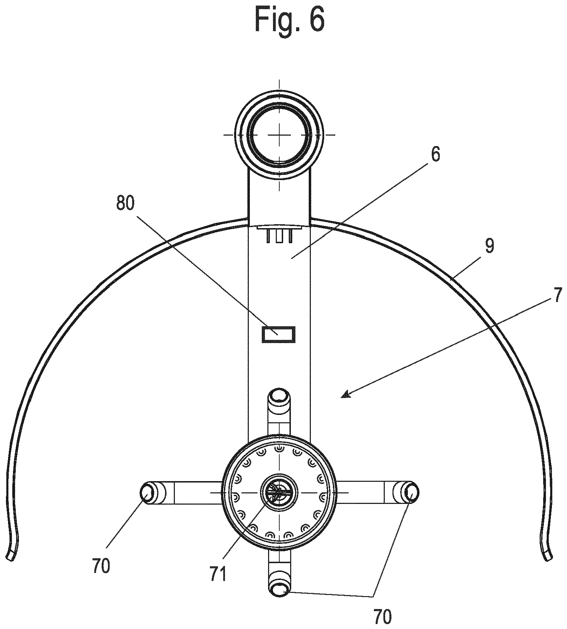

In Figur 6 ist eine Unteransicht des Auslasses 7 gezeigt. Es ist erkennbar, dass eine mittige Auslassöffnung 71 vorgesehen, ist über die das Wasser in einem mittleren Bereich des Filterhalters 30 eingeleitet werden kann. Die Auslassöffnung 71 ist dabei ringförmig ausgestaltet, wobei auch andere Geometrien möglich sind. Radial hervorstehend sind mehrere Auslassöffnungen 70 vorgesehen, die einen Wasserstrahl ausgeben können, der geneigt zur Vertikalen ausgerichtet ist. Hierfür ist ein rohrförmiger Abschnitt vor der jeweiligen Auslassöffnung 70 ebenfalls geneigt zur Vertikalen angeordnet, beispielsweise zwischen 20° und 40°. Dadurch kann durch Änderung des Druckes an der Pumpe 51 die Auslassgeschwindigkeit an den Auslassöffnungen 70 geändert werden, so dass abhängig von der Ausströmgeschwindigkeit der Wasserstrahl radial weiter nach außen oder weniger weit nach außen geleitet wird.

An der Zuleitung 6 ist oberhalb des Filterhalters 30 ein Sensor 80 angeordnet, mittels dem erfassbar ist, ob ein Filterhalter 30, insbesondere ein gefüllter Filterhalter, unter dem Auslauf 7 angeordnet ist. Dann kann eine Ausgabe von heißem Wasser an dem Auslass 7 über die Steuerung der Basisstation 2 verhindert werden, falls versehentlich kein Filterhalter 30 oder ein nicht mit Kaffeemehl gefüllter Filterhalter 30 unter dem Auslass 7 angeordnet ist.

Ein solcher Sensor 80 kann beispielsweise über optische Mittel eine Erkennung durchführen, beispielsweise indem Lichtstrahlen ausgegeben werden und die reflektierten Lichtstrahlen über einen optischen Sensor erfasst werden. Zumindest die Farbgebung unterhalb des Sensors lässt sich auf diese Weise erfassen. Auch andere Sensoren können eingesetzt werden.

In dem dargestellten Ausführungsbeispiel umfasst die Vorrichtung 1 eine Basisstation 1, an der eine Mahleinheit 20 vorgesehen ist. Diese kann in einer modifizierten Ausführung auch weggelassen werden oder als separate Mahleinheit neben der Vorrichtung 1 aufgestellt werden.

### Bezugszeichenliste

- 1: Vorrichtung
- 2: Basisstation
- 3: Netzstecker
- 4: Schalter
- 5: Bedienfeld
- 6: Zuleitung
- 7: Auslass
- 8: Hülse
- 9: Montagehalter
- 10: Tank
- 11: Deckel
- 12: Anschluss
- 13: Öffnung
- 20: Mahleinheit
- 21: Behälter
- 22: Deckel
- 23: Auslass
- 24: Halter
- 25: Verbindungsstecker
- 26: Elektromotor
- 27: Einstellvorrichtung
- 28: Mahlwerk
- 30: Filterhalter
- 31: Innenraum
- 32: Auslass
- 33: Ventil
- 40: Gefäß
- 41: Tasse
- 50: Heizeinrichtung
- 51: Pumpe
- 52: Leitung
- 53: Ventil
- 54: Leitung
- 55: Drosselelement
- 56: Ventil
- 58: Leitung
- 59: Entleerungsleitung
- 60: Ventil
- 61: Leitung
- 62: Leitung
- 63: Rückführleitung
- 70: Auslass
- 71: Auslass
- 80: Sensor

## Patentansprüche

1. Vorrichtung (1) zur Zubereitung eines Brühgetränkes, insbesondere Kaffee, mit einer auf einer horizontalen Fläche abstellbaren Basisstation (2), die einen Tank (10) für Frischwasser, eine Pumpe (51), eine Heizeinrichtung (50) und eine Steuerung aufweist, wobei über die Pumpe (51) Wasser aus dem Tank (10) über die Heizeinrichtung (50) zu einem Auslass (7) förderbar ist, von dem das erhitzte Wasser in einen Filterhalter (30) mit einem Extraktionsmaterial einleitbar ist, wobei an dem Auslass (7) mindestens eine Auslassöffnung (70) vorgesehen ist, aus der das erhitzte Wasser geneigt zur Vertikalen ausströmt und durch eine Druckänderung der Pumpe (51) eine streifenförmige Fläche des Extraktionsmaterials benetzbar ist, **dadurch gekennzeichnet, dass** zwischen der Pumpe (51) und dem Auslass (7) ein Ventil (60) vorgesehen ist, um das erhitzte Wasser wahlweise über eine erste Leitung (61) oder eine zweite Leitung (62) zu dem Auslass (7) zu fördern und die erste Leitung (61) das erhitzte Wasser zu mindestens einer ersten Auslassöffnung (70) und die zweite Leitung (62) das erhitzte Wasser zu mindestens einer zweiten Auslassöffnung (71) an dem Auslass (7) fördert.

2. Vorrichtung nach Anspruch 1, **dadurch gekennzeichnet, dass** ein rohrförmiger Leitungsabschnitt vor der mindestens einen Auslassöffnung (70) geneigt zur Vertikalen ausgerichtet ist.

3. Vorrichtung nach Anspruch 1 oder 2, **dadurch gekennzeichnet, dass** der maximale Winkel des Wasserstrahls zur Vertikalen in einem Bereich zwischen 10° und 60°, insbesondere zwischen 20° bis 40°, liegt.

4. Vorrichtung nach einem der vorhergehenden Ansprüche, **dadurch gekennzeichnet, dass** mehrere Auslassöffnungen (70) an dem Auslass (7) vorgesehen sind, aus denen erhitztes Wasser geneigt zur Vertikalen ausgebbar ist.

5. Vorrichtung nach einem der vorhergehenden Ansprüche, **dadurch gekennzeichnet, dass** die mindestens eine zweite Auslassöffnung (71) mittig und die mindestens eine erste Auslassöffnung (70) radial nach au-ßen hervorstehend um die mittige Auslassöffnung (71) angeordnet ist.

6. Vorrichtung nach einem der vorhergehenden Ansprüche, **dadurch gekennzeichnet, dass** hinter der Heizeinrichtung (50) ein Schaltventil (56) angeordnet ist, um das erhitzte Wasser wahlweise wieder in den Tank (10) für Frischwasser zurückzuleiten oder das erhitzte Wasser dem Auslass (7) zuzuführen.

7. Vorrichtung nach einem der vorhergehenden Ansprüche, **dadurch gekennzeichnet, dass** der Auslass (7) mit den Auslassöffnungen (70, 71) abnehmbar an einer Zulaufleitung (6) zu dem Auslass (7) angeordnet ist.

8. Vorrichtung nach Anspruch 7, **dadurch gekennzeichnet, dass** der Auslass (7) über Magnetkräfte an der Zulaufleitung (6) lösbar fixiert ist.

9. Vorrichtung nach einem der vorhergehenden Ansprüche, **dadurch gekennzeichnet, dass** der Tank (10) abnehmbar an der Basisstation (2) angeordnet ist und über einen ersten Anschluss zum Ableiten von Wasser in die Basisstation und einen zweiten Anschluss zum Zuführen von Wasser von der Basisstation (2) in den Tank (10) mit der Basisstation (2) verbunden ist.

10. Vorrichtung nach einem der vorhergehenden Ansprüche, **dadurch gekennzeichnet, dass** auf der Basisstation (2) eine Mahleinheit (20) mit einem Bohnenbehälter zum Mahlen von Kaffeebohnen angeordnet ist.

11. Vorrichtung nach einem der vorhergehenden Ansprüche, **dadurch gekennzeichnet, dass** an dem Zulauf (6) ein Sensor (80) angeordnet ist, mittels dem erfassbar ist, ob ein Filterhalter (30), insbesondere ein gefüllter Filterhalter (30), unter dem Auslass (7) angeordnet ist.

12. Verfahren zur Zubereitung eines Brühgetränkes mit einer Vorrichtung (1) zur Zubereitung eines Brühgetränkes nach Anspruch 1, mit den folgenden Schritten:
- Positionieren eines mit Extraktionsmaterial befüllten Filterhalters (30) unter einem Auslass (7) für erhitztes Wasser;
- Fördern von Wasser aus einem Tank (10) zu einer Heizeinrichtung (50) und dem Auslass (7) über eine Pumpe (51),
**dadurch gekennzeichnet, dass** an dem Auslass (7) mindestens eine Auslassöffnung (70) vorgesehen ist, aus der das erhitzte Wasser geneigt zur Vertikalen ausströmt und durch eine Druckänderung der Pumpe (51) eine streifenförmige Fläche des Extraktionsmaterials in dem Filterhalter (30) benetzt wird.

13. Verfahren nach Anspruch 12, **dadurch gekennzeichnet, dass** die Pumpe (51) beim Fördern von Wasser aus dem Tank (10) pulsierend betrieben wird.

## Claims

1. Device (1) for preparing a brewed beverage, in particular coffee, with a base station (2) which can be placed on a horizontal surface and which has a tank (10) for fresh water, a pump (51), a heating device (50) and a control system, wherein water can be conveyed via the pump (51) from the tank (10) via the heating device (50) to an outlet (7), from which the heated water can be introduced into a filter holder (30) with an extraction material, wherein at least one outlet opening (70) is provided at the outlet (7), from which the heated water flows out inclined to the vertical and a strip-shaped surface of the extraction material can be wetted by a pressure change of the pump (51), **characterized in that** a valve (60) is provided between the pump (51) and the outlet (7), to convey the heated water selectively via a first conduit (61) or a second conduit (62) to the outlet (7), and the first conduit (61) conveys the heated water to at least one first outlet opening (70) and the second conduit (62) conveys the heated water to at least one second outlet opening (71) at the outlet (7).

2. The device of claim 1, **characterized in that** a tubular conduit section upstream of the at least one outlet opening (70) is oriented inclined to the vertical.

3. The device according to claim 1 or 2, **characterized in that** the maximum angle of the water jet to the vertical is in a range between 10° and 60°, in particular between 20° to 40°.

4. The device according to any one of the preceding claims, **characterized in that** a plurality of outlet openings (70) are provided at the outlet (7), from which heated water can be discharged inclined to the vertical.

5. The device according to any one of the preceding claims, **characterized in that** the at least one second outlet opening (71) is arranged centrally and the at least one first outlet opening (70) is arranged projecting radially outwardly around the central outlet opening (71).

6. The device according to one of the preceding claims, **characterized in that** a switching valve (56) is arranged downstream of the heating device (50) in order to selectively return the heated water to the tank (10) for fresh water or to feed the heated water to the outlet (7).

7. The device according to any one of the preceding claims, **characterized in that** the outlet (7) with the outlet openings (70, 71) is removably arranged on a supply line (6) to the outlet (7).

8. The device according to claim 7, **characterized in that** the outlet (7) is detachably fixed to the supply line (6) by magnetic forces.

9. The device according to any one of the preceding claims, **characterized in that** the tank (10) is removably arranged on the base station (2) and is connected to the base station (2) via a first connection for discharging water into the base station and a second connection for supplying water from the base station (2) into the tank (10).

10. The device according to any of the preceding claims, **characterized in that** a grinding unit (20) with a bean container for grinding coffee beans is arranged on the base station (2).

11. The device according to one of the preceding claims, **characterized in that** a sensor (80) is arranged at the supply line (6), by means of which it can be detected whether a filter holder (30), in particular a filled filter holder (30), is arranged under the outlet (7).

12. Method for preparing a brewed beverage with a device (1) for preparing a brewed beverage according to claim 1, comprising the following steps:
- Positioning a filter holder (30) filled with extraction material under an outlet (7) for heated water;
- Conveying water from a tank (10) to a heating device (50) and the outlet (7) via a pump (51),
**characterized in that** at least one outlet opening (70) is provided at the outlet (7), from which the heated water flows out inclined to the vertical and a strip-shaped surface of the extraction material in the filter holder (30) is wetted by a pressure change of the pump (51).

13. The method of claim 12, **characterized in that** the pump (51) is operated in a pulsating manner when pumping water from the tank (10).

## Revendications

1. Dispositif (1) pour préparer une infusion, en particulier du café ayant une station de base (2) se plaçant sur une surface horizontale et qui a un réservoir (10) pour de l'eau froide, une pompe (51), une installation de chauffage (50) et une commande,
- la pompe (51) transférant l'eau du réservoir (10) à travers l'installation de chauffage (50) vers la sortie (7) d'où l'eau chaude arrive sur un porte-filtre (30) contenant le produit d'extraction,
- la sortie (7) ayant au moins un orifice de sortie (70) d'où l'eau chaude coule dans une direction inclinée par rapport à la direction verticale et mouille, par une variation de pression de la pompe (51) une surface en forme de bande du produit d'extraction,
dispositif **caractérisé en ce que** une vanne (60) est prévue entre la pompe (51) et la sortie (7) pour faire passer l'eau chaude soit par une première conduite (61), soit par une seconde conduite (62) vers la sortie (7), la première conduite (61) faisant arriver l'eau chaude à au moins un premier orifice de sortie (70) et la seconde conduite (62) faisant arriver l'eau chaude à au moins un second orifice (71) de la sortie (7).

2. Dispositif selon la revendication 1, **caractérisé en ce que** un segment de conduite, tubulaire, est incliné par rapport à la verticale avant un orifice de sortie (70).

3. Dispositif selon la revendication 1 ou 2, **caractérisé en ce que** l'angle maximum du jet d'eau par rapport à la verticale est dans une plage comprise entre 10° et 60°, notamment entre 20° et 40°.

4. Dispositif selon l'une des revendications précédentes, **caractérisé en ce que** la sortie (7) comporte plusieurs orifices de sortie (70) qui distribuent l'eau chaude dans une direction inclinée par rapport à la verticale.

5. Dispositif selon l'une des revendications précédentes, **caractérisé en ce que** au moins ce second orifice de sortie (71) est prévu au milieu et au moins le premier orifice de sortie (70) est en saillie radialement vers l'extérieur autour de l'orifice de sortie central (71).

6. Dispositif selon l'une des revendications précédentes, **caractérisé par** une vanne commandée (56) en aval de l'installation de chauffage (50) pour conduire l'eau chaude soit de retour dans le réservoir (10) d'eau froide, soit vers la sortie (7).

7. Dispositif selon l'une des revendications précédentes, **caractérisé en ce que** la sortie (7) avec ses orifices de sortie (70, 71) est reliée de manière amovible à une conduite d'alimentation (6) vers la sortie (7).

8. Dispositif selon la revendication 7, **caractérisé en ce que** la sortie (7) est fixée de manière amovible par des forces magnétiques à la conduite d'alimentation (6).

9. Dispositif selon l'une des revendications précédentes, **caractérisé en ce que** le réservoir (10) est installé de manière amovible sur la station de base (2) et il est relié avec la station de base (2) par un premier branchement pour diriger l'eau dans la station de base et un second branchement pour l'alimentation en eau de la station de base (2) au réservoir (10).

10. Dispositif selon l'une des revendications précédentes, **caractérisé en ce que** la station de base (2) porte un moulin (20) avec un réceptacle à grains pour broyer des grains de café.

11. Dispositif selon l'une des revendications précédentes, **caractérisé en ce que** l'alimentation (6) comporte un capteur (80) qui détecte si un porte-filtre (30), notamment un porte filtre chargé (30) est sous la sortie (7).

12. Procédé de préparation d'une infusion avec un dispositif (1) pour préparer une infusion selon la revendication 1, consistant à :
- positionner un porte-filtre (30) chargé du produit d'extraction sous une sortie (7) d'eau chaude,
- transférer l'eau du réservoir (10) vers une installation de chauffage (50) et vers la sortie (7) par une pompe (51),
procédé **caractérisé en ce que** la sortie (7) comporte au moins un orifice de sortie (70) d'où l'eau chaude est dirigée de façon inclinée par rapport à la direction verticale et par une variation de pression de la pompe (51), on mouille une surface en forme de bande du produit d'extraction du porte-filtre (30).

13. Procédé selon la revendication 12, **caractérisé en ce que** la pompe (51) a un fonctionnement pulsé pour transférer l'eau à partir du réservoir (10).
